**Europäisches Patentamt**

**European Patent Office**

**Office européen des brevets**

(11) Publication number: **0 013 646**

**B1**

(12) **EUROPEAN PATENT SPECIFICATION**

(45) Date of publication of patent specification: **07.11.84**

(51) Int. Cl.³: **B 23 B 31/20**

(21) Application number: **80400019.8**

(22) Date of filing: **08.01.80**

(54) **Collet and chuck assembly.**

(30) Priority: **09.01.79 US 2117**
**09.01.79 US 2118**
**09.01.79 US 2119**

(43) Date of publication of application:
**23.07.80 Bulletin 80/15**

(45) Publication of the grant of the patent:
**07.11.84 Bulletin 84/45**

(84) Designated Contracting States:
**DE FR GB**

(56) References cited:
**DE-A-1 927 246**
**DE-B-1 233 233**
**DE-B-1 270 366**
**GB-A- 729 051**
**US-A-2 337 400**
**US-A-2 896 956**
**US-A-3 036 839**
**US-A-3 762 731**
**US-A-3 811 694**
**US-A-3 830 135**

(73) Proprietor: **THE BENDIX CORPORATION**
**Executive Offices Bendix Center**
**Southfield Michigan 48037 (US)**

(72) Inventor: **Cummings, Willard**
**Route 2, Box 344**
**Pembroke, North Carolina 28372 (US)**
Inventor: **Staron, John Christopher**
**10421 West Palmer Avenue**
**Melrose Park, Illinois 60164 (US)**
Inventor: **Lewis, David Leroy**
**1225 Sleepy Hollow Lane**
**Darien, Illinois 60559 (US)**

(74) Representative: **Lerner, François et al**
**5, rue Jules Lefebvre**
**F-75009 Paris (FR)**

Courier Press, Leamington Spa, England.

## Description

The present invention relates to a collet and chuck assembly.

Such a device is generally provided for holding an end mill or similar tool to prevent axial or rotational movement with respect to the apparatus during machining.

An end mill tool is a cylindrical cutting tool which has cutting or milling edges around the round portion at one or more of its ends along with cutting teeth on its end toward at least one of its forward ends. The tool has a generally cylindrical rear or central shank with at least one beveled-ended flat surface which is secured in the collet and chuck assembly during machining.

Various known designs generally include a tool-securing pin slidably received in a radial aperture of the collet and associated with a retaining member which interferes within the aperture with surfaces of the tool-securing pin for limiting the travel thereof. The pin should be easily slidable to secure and release the tool, while resisting accidental separation of the pin from the collet. However, for service or repair, the pin should be quickly and easily released. Further, the mounting and retaining mechanism should not be on the external surface of the collet, to minimize the chance of damage thereto. Also, a very thin-walled collet (i.e., where the tool shank is almost as the chuck bore) must suitably accommodate the pin and its retention system, while allowing limited pin movement.

Examples of such collet and chuck assemblies are shown in US Patents 3 195 909; 3 425 705; 3 618 962 and others, but these fail to fulfill many of the above requirements.

The object of the present invention is a collet and chuck assembly which overcomes limitations and disadvantages of the prior art assemblies.

In the present invention, the retaining member for the tool-securing pin is a resiliently compressible member having a no-load dimension greater than the transverse dimension of the radial aperture of the collet and being compressible to a dimension allowing its insertion into the aperture.

This provides a convenient means for securing an end mill or similar tool when desired and for quickly and easily releasing it. The collet is relatively inexpensive to manufacture and assemble, easily and quickly assembled and has a minimum of external parts. The collet also has a high reliability and resistance to damage and to accidental separation of parts which could lead to a loss of parts. Further, the collet and chuck assembly of the present invention are equally useful in both thin and thick wall collets.

In one embodiment, the pin is mounted in the radial aperture with an undercut extending therethrough with a spring bar mounted in the undercut. The spring bar, which has a free or no-force diameter slightly larger than the aperture portion and less than the medial undercut is inserted through the pin in the pin aperture, then the pin and spring bar assembly are inserted into the collet aperture with the spring bar in the undercut. The spring bar is compressed for insertion, then expands to retain the pin within the collet aperture. A pin aperture larger than the diameter of the spring bar allows the pin to move alongs its axis (radially with respect to the collet) to lock the tool shank therein.

In another embodiment, the collet and chuck assembly includes a collet having a pin mounted in a two-diameter radial aperture extending through the collet. The pin has a small undercut portion intermediate its end portions with a snap ring (or spring) mounted in the undercut. The snap ring, which has a free or no-force diameter slightly larger than the larger diameter aperture portion, is assembled around the pin in the undercut portion, then force into the larger diameter portion of the aperture. The snap ring provides a radial force, creating a friction with the aperture restricting removal of the pin. The undercut length on the pin is larger than the thickness of the snap ring to allow a limited movement of the pin, while preventing the pin from becoming accidentally separated from the collet and to add self-adjustment capacity of snap ring in axial position.

The invention will now be described by way of example with reference to the accompanying drawings in which:

Figure 1 is a cross-sectional view of a collet and chuck assembly according to one form of the present invention;

Figure 2 is a cross-sectional view of the assembly taken along line II—II of Figure 1;

Figure 3 is an enlarged cross-sectional view of the tool-securing member of Figures 1 and 2;

Figure 4 is a cross-sectional view of the collet portion of figure 3, taken along line IV—IV thereof with two positions of a cutting tool shown in dotted lines;

Figure 5 is a cross-sectional view of a spring bar forming a tool-securing member;

Figures 6 to 8 are views similar to the views of Figures 1 to 3 relating to a second embodiment of the invention;

Figure 9 is a view of a snap ring preferred in the embodiment of Figure 8;

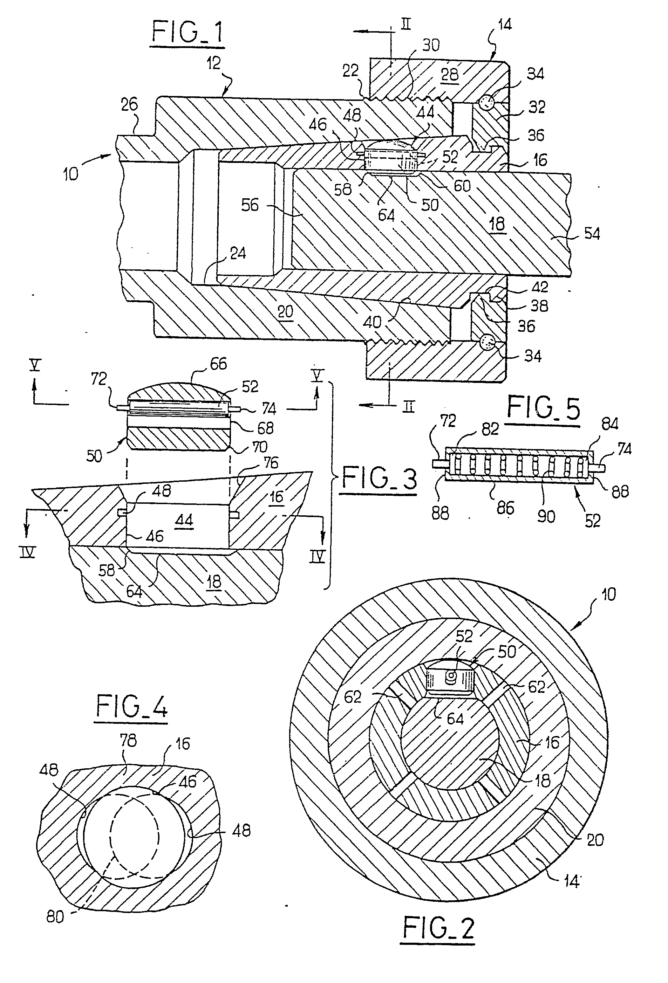

Figure 1 shows a cross-sectional view of a part of a collet and chuck assembly 10 according to a first embodiment of the present invention. The chuck assembly 10 includes a chuck body or collet holder 12 and a lock nut 14. A collet 16 is mounted within the collet holder 12 and has an end mill tool 18 mounted therein.

The collet holder 12 is of a well-known and conventional design and includes a body 20 with external forward screw threads 22 and an internal, inwardly tapering bore 24 extending rearwardly from the forward end of the body. A rear portion 26 is a shank which is configured to be secured in a machine tool or spindle.

The lock nut 14 is also a conventional design. The lock nut 14 includes a body 28 with internal threads 30 adapted to mate with the external threads 22 on the collet holder 12. A second member 32 of the lock nut 14 is coupled to the body 28 with ball bearings 34 and the member 32 has a projection 36, the purpose of which will be explained later.

The collet 16 is preferably made of an appropriate spring-type steel which has been hardened and drawn, as is well-known and customary in making collets. The collet has a body with an internal tool-receiving bore and with an outside external surface which tapers generally to a smaller rear diameter.

The external surface of collet 16 has a forward portion 38 and a tapering rear portion 40, separated by an annular groove 42. The rear portion 40 seats against and engages internal walls of the tapered holder bore 24 when the collet 16 is fully inserted. Preferably, two (or more) spatially-separated surfaces of the rear collet portion 40 are in contact with the bore 24 providing good engagement within the collet holder 12.

The lock nut projection 36 cooperates with the forward collet portion 38 and annular groove 42 to release the collet 16 from the collet holder bore 24 as the lock nut 14 is unscrewed in disassembly.

A radial aperture 44 extends through the collet 16 medially along the length of the collet. The aperture 44 includes a first portion 46 and an undercut diameter portion 48. A tool-securing pin 50 is positioned within the aperture 44 and is held in place by a spring bar 52.

The tool 18 is a conventional tool (such as an end mill) which has forward cutting surfaces and rear shank 56. The forward cutting surfaces 54 have side surfaces, as well as end surfaces, for cutting and may have a tendency for axial pullout. Therefore, the shank 56 of an end mill tool has one or more flat surfaces with forward and rear beveled ends 58, 60 for tool retention. The beveled ends 58, 60 have a 45° angle with respect to the axis of the tool. The beveled flat surface, when suitably engaged within the collet, prevents the tool from being pulled out of the holder.

Figure 2 is a cross-sectional view of the chuck assembly 10, showing the chuck body 20, the lock nut 14, the collet 16 and the tool 18. The collet 16 include slots 62 to provide radial compressibility and resiliency. The tool 18 has the flat surface 64 shown in this view slightly above the bottom of the tool locking pin 50.

Figure 3 is an enlarged view of the pin 50, spring bar 52, aperture 44 and tool 18 prior to assembly of the pin into the aperture 44.

The pin 50 is generally cylindrical and includes a radiused or rounded head 66. A radial hole or aperture 68 extends through the pin 50 below the head 66. The pin 50 has a lower chamfered portion 70 which has a 45° angle for engaging the 45° beveled surface 58 of the tool 18.

The spring bar 52 has ends 72 and 74. The spring bar 52 is mounted within the hole 68 of the pin. The ends 72, 74 extend beyond the pin 50 normally, but may be compressed to a size no larger than the pin diameter. The ends 72, 74 are compressibly mounted inside the spring bar 52 as shown in Figure 5. The hole 68 in the pin 50 is larger than the diameter of the spring bar 52 to allow the pin 50 to move radially with respect to the collet 16 (up and down in Figure 3) without movement of the spring bar 52. This movement allows the pin 50 to lock and release, as desired, the tool 18.

The aperture 44 has a chamfered entry 76, a portion 46 of generally uniform diameter and an undercut diameter portion 48. The undercut portion 48 receives the ends 72, 74 of the spring bar 52 when the pin 50 is inserted in the aperture 44.

Figure 4 shows a cross-sectional portion of the collet 16. The portion 46 of the aperture is shown, as is the undercut portions 48. The undercut portions 48 may be formed without requring a separate setup of the collet 16 by using a Woodruff cutter and moving the collet 16 slightly back and forth when the Woodruff cutter is in place. Dotted lines 78, 80 show the extremes of the movement of the cutter to form the undercuts 48. Of course, other suitable methods of making the undercut could be employed advantageously.

Figure 5 shows a cross-sectional view of the spring bar 52 taken along the line V—V in Figure 3. The spring bar 52 includes the ends 72, 74. The ends 72, 74 have enlarged portions 82, 84, respectively, which are held within a body 86. Ends 88 of the body are crimped over (or have other suitable retaining means) to hold the ends 72, 74 in the body 86. A spring 90 urges the ends outward normally. The ends may be compressed or urged inwardly by compressing the spring 90.

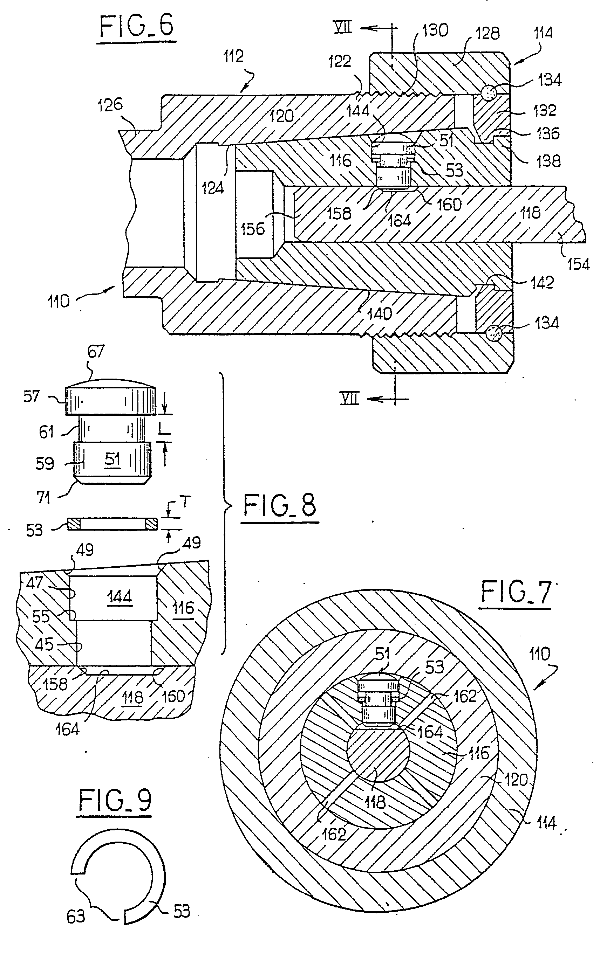

Figures 6 to 9 relate to a second embodiment and the numeral references designating parts identical or similar to those of Figures 1 and 2 are the same with the addition of one hundred.

As shown in Figure 6, a tool-securing pin 51 is positioned within the aperture 144 and is held in place by a snap ring or spring member 53.

The pin 51 has structure which will be described in detail in connection with Figure 8. The pin 51 is radially movable through a limited range of radial movement when assembled, as will also be discussed later.

The snap ring 53 is made from a carbon spring steel, preferably a "square section ring" and has a free, or uncompressed, diameter which is slightly larger than the larger diameter portion of the aperture 144. The spring 53 must be compressed from its free, or no-force, diameter to be inserted into the aperture, and once inserted, provides an outward or radial force against the wall of the aperture to retard its movement with respect thereto.

Figure 7 shows a cross-sectional view of the assembly 110 taken along the line VII—VII in Figure 6. The lock nut 114 is mounted concentrically around the body 120. Features of the collet 116 are shown: slots 162, the tool-securing pin 51, and the snap ring 53. The tool 118 and the flat surface 164 are also apparent in this view.

When the collet 116 is fully inserted and held within the collet holder 112, a centering of the tool 118 and an elimination of clearance between the tool 118 and the collet 116 are accomplished. The clearance is necessary for the insertion of the tool into and the removal of the tool out of the collet, but is provided only when the collet 116 is free of the holder 112.

Figure 8 shows the pin 51, the snap ring 53 and the aperture 144, a portion of the collet 116 and tool 118 in an enlarged cross-sectional view. The radial aperture 144 in the collet 116 receives the pin 51 and snap ring 53 when assembled.

The aperture 144 has a chamfer, or a tapered outer entrance, 49, a larger diameter portion 47 and a smaller diameter portion 45, which portions 45, 47 meet at a shoulder 55. The radial aperture 144 could be made by drilling a hole of the smaller diameter through the collet body 116, then provide the larger diameter toward the other surface of the collet with a counterbore. A single pass with a step drill could also be used advantageously. In any event, the chamfer 49 would be provided in a known manner.

As an alternate design and configuration, the collet aperture 144 could be manufactured with an enlarged diameter or undercut in the medial portion. The snap ring 53 would then be assembled into the larger diameter or undercut medial portion.

The pin 51 has a rounded, or radiused, head 67, a larger diameter upper portion 57, a smaller diameter lower portion 59 and an undercut portion 61 located between the portions 57, 59. The undercut portion 61 has a length L.

The snap ring 53 has a thickness T which, for a 12 mm diameter shank end mill tool, is preferably chosen so that the length L exceeds the thickness T by approximately 2 mm, so that the pin 51 can travel 2 mm to secure and release the flat surface 164 of the tool 118. The length L should be chosen to exceed the depth of the flat on the tool by approximately 0.5 mm to clear the bore by that amount during tool insertion. For large diameter shank tools, the dimensions are suitably larger.

The pin 51 is provided with a chamfer 71 extending around the lower portion 59. The chamber 71, or beveled surface, has a 45° angle with respect to the axis of the pin 51, which angle complements the angle on the rear beveled end 158 of the tool shank flat surface 164. The chamfer 71, in fact, engages the beveled end 158 when the tool 118 is secured in the collet 116, without the necessity of the bottom of the pin 51 engaging the flat 164 itself. Preferably, the bottom of the pin is approximately 0.375 mm above the flat 164 when the tool is secured, as is shown in Figures 6 and 7.

The pin 51 is assembled into the collet 116 as follows. The snap ring 53 is inserted around the pin 51 in the region of the undercut 61 and has an inside diameter greater than that of the undercut but less than the other pin portions, so that the snap ring 53 is captivated within the undercut, while allowing the spring to move radially in the undercut. The assembled pin 51 and snap ring 53 are then forced into the aperture 144, which forcing compresses the snap ring to a diameter no larger than the diameter of the larger portion 47 of the aperture. The compression is accomplished by the tapered entry 49. The snap ring 53, when fully inserted, seats on the shoulder 55 and is prevented from moving outward by its radial force against aperture portion 47 and the resulting friction.

When the collet 116 is secured within the bore 124 of the collet holder 112, the head 67 of the pin 51 is depressed radially to cause the chamfer 71 to engage the beveled surface 158.

Figure 9 shows the snap ring 53. The snap ring 53 is preferably a single turn having substantially two-thirds of one revolution, with a gap 63 between the ends. The gap 63, chosen to be approximately 8 mm in the preferred embodiment, allows the snap ring 53 to be inserted by hand (without tools) in the region of the undercut 61.

## Claims

1. A collet (16) and chuck (12) asembly including a tool securing pin (50, 51) slidably received in a radial aperture (45, 46) of the collet and associated with a retaining member (52, 53) which interferes within the aperture with surfaces of the tool-securing pin for limiting the travel thereof, characterized in that the retaining member is a resiliently compressible member having a no-load dimension greater than the transverse dimension of the radial aperture of the collet and being compressible to a dimension allowing its insertion into the aperture, said retaining member being mounted in an undercut portion (48, 61) associated with the collet radial aperture and the pin.

2. An assembly according to claim 1, characterized in that the retaining member (52) is a spring bar having a medial portion (86) extending through a transverse channel (68) of the tool-securing pin (50) and resiliently retractable end portions (72, 74), said undercut (48) being formed in the wall of the aperture (46) for receiving said end portions in a substantially released condition.

3. An assembly according to claim 1, characterized in that the retaining member (53) is a snap ring mounted around the tool-securing pin (51) in an undercut portion (61) thereof, said snap ring having a no-force diameter greater than the radial aperture of the collet and being compressible to a diameter allowing its insertion into the aperture.

4. An assembly according to claim 3, characterized in that said snap ring (53) has a square cross-section.

5. An assembly according to claim 3, characterized in that said snap ring (53) is an open type having a gap (63) between its ends to allow the snap ring (53) to be inserted by hand in the undercut portion (61) thereof.

6. An assembly according to claim 1, characterized in that the radial aperture is provided with a chamfer (49, 76) for compressing the compressible retaining member (52, 53) during insertion.

## Revendications

1. Assemblage d'un mandrin (16) et d'une pince de serrage (12) comportant une broche (50, 51) de fixation d'outil reçue en coulissement dans une ouverture radiale (45, 46) du mandrin et associèe à un élément de retenue (52, 53) qui coopère dans l'ouverture avec des surfaces de la broche de fixation d'outil pour en limiter les déplacements caractérisé en ce que l'élément de retenue est un élément compressible élastiquement dont la dimension à l'état non-contraint est plus grande que la dimension transversale de l'ouverture radiale du mandrin et qui est susceptible d'être comprimé à une dimension permettant son insertion dans l'ouverture, ledit élément de retenue étant monté dans une découpe (48, 61) pratiquée dans l'ouverture radiale et la broche.

2. Assemblage selon la revendication 1, caractérisé en ce que l'élément de retenue (52) est un barreau élastique ayant une partie centrale (86) qui s'étend dans un canal transversal (68) et la broche (50) de fixation d'outil et des parties d'extrémité (72, 74) rétractables élastiquement, ladite découpe (48) étant ménagée dans la paroi de l'ouverture (46) pour recevoir lesdites parties d'extrémité lorsqu'elles se trouvent à l'état détendu.

3. Assemblage selon la revendication 1, caractérisé en ce que l'élément de retenue (53) est une bague élastique montée autour de la broche de fixation d'outil (51) dans une découpe (61) de cette dernière, ladite bague élastique ayant un diamètre à l'état libre supérieur à celui de l'ouverture radiale du mandrin et étant susceptible d'être comprimée à un diamètre permettant son insertion dans l'ouverture.

4. Assemblage selon la revendication 3, caractérisé en ce que ladite bague élastique (53) a une section carrée.

5. Assemblage selon la revendication 3, caractérisé en ce que ladite bague élastique (53) est du type ouvert, présentant une fente (63) entre ses extrémités pour permettre à la bague élastique (53) d'être insérée à la main dans la découpe (61).

6. Assemblage selon la revendication 1, caractérisé en ce que l'ouverture radiale est prévue avec un chanfrein (49, 76) destiné à comprimer l'élément de retenue compressible (52, 53) lors de son insertion.

## Patentansprüche

1. Spannzangen- (16) und Spannfutter-(12)-Zusammenbau mit einem Werkzeugbefestigungsstift (50, 51), der gleitbar in einer Radialöffnung (45, 46) der Spannzange aufgenommen ist und mit einem Sicherungsteil (52, 53) verbunden ist, das in der Öffnung mit den Oberflächen des Werkzeugbefestigungsstiftes eingreift, um dessen Hin- und Herbewegung zu begrenzen, dadurch gekennzeichnet, daß das Sicherungsteil ein elastisch zusammenpreßbares Teil ist, das in unbelastetem Zustand eine größere Abmessung als die Querabmessung der Radialöffnung der Spannzange hat und auf eine Abmessung zusammenpreßbar ist, die sein Einfügen in die Öffnung gestattet, wobei dieses Sicherungsteil in einem Hinterschneidungsabschnitt (48, 61) befestigt ist, der mit der Radialöffnung der Spannzange und dem Stift verbunden ist.

2. Zusammenbau nach Anspruch 1, dadurch gekennzeichnet, daß das Sicherungsteil (52) ein Federstab mit einem Mittelabschnitt (86), der sich durch einen Querkanal (68) des Werkzeugbefestigungsstiftes (50) erstreckt, und elastisch einschiebbaren Endabschnitten (72, 74) ist, wobei die Hinterschneidung (48) in der Wand der Öffnung (46) zur Aufnahme dieser Endabschnitte in einem im wesentlichen entspannten Zustand ausgebildet ist.

3. Zusammenbau nach Anspruch 1, dadurch gekennzeichnet, daß das Sicherungsteil (53) ein um den Werkzeugbefestigungsstift (51) herum in einem Hinterschneidungsabschnitt (61) desselben angeordneter Sprengring ist, wobei der Sprengring ohne Spannung einen größeren Durchmesser als die Radialöffnung der Spannzange hat und auf einen Durchmesser zusammenpreßbar ist, der sein Einfügen in die Öffnung gestattet.

4. Zusammenbau nach Anspruch 3, dadurch gekennzeichnet, daß der Sprengring (53) einen rechteckigen Querschnitt hat.

5. Zusammenbau nach Anspruch 3, dadurch gekennzeichnet, daß der Sprengring (53) ein offener Ring mit einer Öffnung (63) zwischen seinen Enden ist, die es erlauben, daß der Sprengring (53) von Hand in den Hinterschneidungsabschnitt (61) eingefügt wird.

6. Zusammenbau nach Anspruch 1, dadurch gekennzeichnet, daß die Radialöffnung mit einer Abschrägung (49, 76) für ein Zusammenpressen des zusammenpreßbaren Sicherungsteils (52, 53) während des Einfügens ausgestattet ist.

0013646

FIG_1

FIG_2

FIG_3

FIG_4

FIG_5

1

FIG_6

FIG_8

FIG_7

FIG_9